# FASCICULE DE BREVET EUROPEEN

(11) **EP 1 111 881 B1**
(45) Date de publication et mention de la délivrance du brevet: **08.04.2009**
(21) Numéro de dépôt: 00403518.4
(22) Date de dépôt: 14.12.2000
(51) Int. Cl.: H04M 1/57, H04Q 3/72

(54) **Procédé d'obtention d'information sur l'identité d'un appelant sur un téléphone portable en utilisant des agents**
Verfahren zur Erfassung von Anruferidentitätinformationen in einem Mobiltelefon unter Verwendung eines Agenten
Method for retrieving information on the identity of the caller in a mobile phone using agents

(30) Priorité: 23.12.1999 FR 9916338
(43) Date de publication de la demande: 27.06.2001
(73) Titulaire: Alcatel Lucent, 75008 Paris (FR)
(72) Inventeur: Le Grendre, Yves, 95380 Puiseux en France (FR); Guirauton, Alain, 95100 Argenteuil (FR)
(74) Mandataire: Korakis-Ménager, Sophie

(56) Documents cités:
- WO-A-99/21171
- US-A- 5 606 693
- US-A- 5 740 423
- US-A- 5 842 009
- US-A- 5 982 867

## Description

La présente invention concerne les terminaux de communication téléphonique, et plus précisément l'affichage d'une identification de l'appelant pour les appels entrants.

De nombreux opérateurs proposent, pour différents types de réseaux de communication téléphonique - réseau public commuté, réseau public mobile terrestre ou non -de transmettre le numéro de téléphone de l'appelant lors des appels entrants. Ce numéro peut être affiché sur un écran du terminal recevant l'appel, ou stocké dans une mémoire de ce terminal. Le problème de l'invention est d'associer à un tel numéro de téléphone une information relative à l'appelant. De fait, le numéro de téléphone n'est pas un identifiant simple et il peut s'avérer difficile pour l'utilisateur du terminal d'identifier l'appelant simplement à partir de son numéro de téléphone.

Diverses solutions à ce problème ont déjà été proposées. Une première solution s'applique aux terminaux dans lesquels est stocké un répertoire de noms associés à des numéros de téléphone. Pour de tels terminaux, lors de la réception d'un numéro d'appelant, le numéro d'appelant est comparé à l'ensemble des numéros de téléphone stockés dans la liste; en cas de coïncidence entre le numéro d'appelant reçu et un numéro stocké dans le répertoire, le nom correspondant au numéro stocké dans le répertoire est affiché sur l'écran; dans certains terminaux l'affichage du nom de l'appelant remplace le numéro, dans d'autres il vient s'afficher en plus du numéro . Cette solution est mise en oeuvre sur certains terminaux mobiles actuellement dans le commerce. Cette solution est limitée au répertoire ou aux répertoires du terminal, et ne permet pas de fournir le nom d'un appelant ne faisant pas partie du ou des répertoires du terminal.

Dans le cas de réseaux privés (PABX par exemple), le nom de l'appelant - s'il s'agit d'un abonné du réseau privé - peut être transmis et affiché. Ce service n'est pas fourni dans le cas d'un appelant externe non renseigné dans la base de données du système privé.

US-A-5 077 788 propose une autre solution à ce problème, dédié aux appels d'urgences - le numéro 911 aux Etats-Unis. Ce document propose de transmettre les appels a une station de réponse. Celle-ci dispose d'une mémoire contenant les informations relatives aux appelants et des informations relatives aux agences d'intervention. A réception d'un appel, la station de réponse récupère dans la mémoire les informations relatives à l'appelant, à partir du numéro de l'appelant, et transmet ces informations à l'agence d'intervention appropriée. Cette solution n'est satisfaisante que dans la mesure où l'information relative au nom de l'appelant est effectivement stockée dans la mémoire de la station de réponse, et de ce point de vue, cette solution est exactement similaire à la solution du répertoire mentionnée plus haut.

US-A- 5 341 414 décrit divers systèmes existant aux Etats-Unis, et notamment le système ANI (acronyme de l'anglais "Interstate Automatic Number Identification", identification inter-Etats automatique du numéro). Ce système fournit des informations relatives à l'appelant à partir d'une base de données unique; cette solution est limitée par le contenu de la base de données unique. WO-A-97 33 418 décrit une amélioration au système ANI, pour fournir d'outres types d'informations, toujours à partir d'une base de données unique. Les inconvénients sont les mêmes

US-A-5 982 867 concerne un procédé pour fournir le nom de l'Etat et éventuellement due la ville d'un appelant dont le nom est indisponible.

Il existe enfin divers services permettant de fournir un nom à partir d'un numéro de téléphone. Le service Minitel dont le code est "3617 ANNU" permet ainsi d'obtenir les coordonnées d'un abonné à partir de son numéro de téléphone. Lé site Internet Annu.web fournit le même service.

L'invention propose une solution au problème mentionné plus haut, à savoir fournir une identification de l'appelant à partir de son numéro de téléphone. La solution dé l'invention permet de fournir cette identification, indépendamment d'un serveur donné.

Plus précisément, l'invention propose un procédé d'obtention d'information sur l'identité d'un appelant dans un terminal d'un réseau de communication téléphonique, comprenant:
- la réception par le terminal d'un appel entrant et du numéro de l'appelant, caractérisé par les étapes suivantes:
   - la sélection par un agent du terminal d'au moins un serveur externe susceptible de fournir la dite information sur l'identité de l'appelant;
   - la préparation par l'agent d'une requête ayant pour argument le numéro de téléphone et pour destinataire le serveur;
   - l'envoi par l'agent de la requête vers le serveur;
   - la réception par l'agent de la réponse du serveur, et
   - en l'absence de réponse, ou si la réponse n'est pas satisfaisante, la sélection d'un autre serveur, la préparation d'une autre requête et l'envoi de l'autre requête vers l'autre serveur.

Ces étapes de réception, de sélection d'un autre serveur de préparation d'une autre requête et d'envoi de l'autre requête vers l'autre serveur peuvent être répétées en l'absence de réponse ou si la réponse n'est pas satisfaisante.

Avantageusement, l'étape de sélection s'effectue par recherche dans un fichier de requêtes.

Dans un mode de mise en oeuvre du procédé, le terminal est un terminal présentant un canal de données, et l'envoi d'une requête s'effectue sur le canal données.

Le terminal peut aussi être un terminal mobile.

L'invention concerne aussi un terminal d'un réseau de communication téléphonique dans lequel le numéro d'appelant est transmis lors d'un appel entrant, caractérisé par un agent comprenant :
- des moyens de sélection d'au moins un serveur externe susceptible de fournir la dite information;
- des moyens de préparation d'une requête ayant pour argument le numéro de téléphone et pour destinataire le serveur;
- des moyens d'envoi de la requête vers le serveur;
- des moyens de réception de la réponse du serveur, et
- en l'absence de réponse, ou si la réponse n'est pas satisfaisante, des moyens de sélection d'un autre serveur, préparation d'une autre requête et envoi de l'autre requête vers l'autre serveur.

De préférence, l'agent répète les étapes de réception, de sélection d'un autre serveur de préparation d'une autre requête et d'envoi de l'autre requête vers l'autre serveur en l'absence de réponse ou si la réponse n'est pas satisfaisante.

Le terminal peut encore comprendre un fichier de requêtes auquel l'agent accède pour sélectionner un serveur et préparer une requête.

Dans un mode de réalisation, le terminal est un terminal présentant un canal de données, et l'envoi d'une requête s'effectue sur le canal données.

Dans un autre mode de réalisation, le terminal est un terminal mobile.

Dans encore un autre mode de réalisation, le terminal est un terminal fixe raccordé au réseau téléphonique

Dans un dernier mode de réalisation, le terminal est un terminal fixe ayant un accès internet.

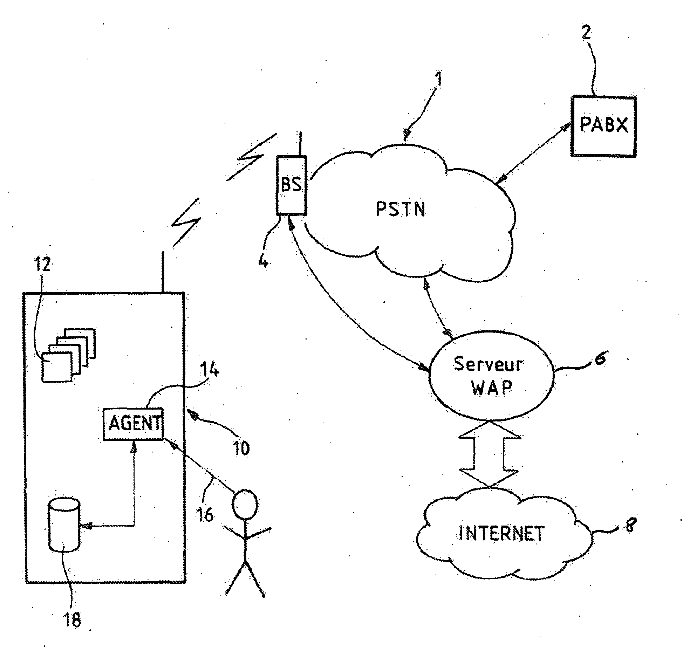

D'autres caractéristiques et avantages de l'invention apparaîtront à la lecture de la description qui suit de modes de réalisation de l'invention, donnés à titre d'exemple et en référence aux dessins annexés, dont la figure unique montre une représentation schématique d'un système de communication dans lequel l'invention est mise en oeuvre.

Dans la suite de la description, l'invention est décrite dans le cas particulier où l'information d'identification de l'appelant est son nom; l'invention s'applique aussi indépendamment de la nature de l'information d'identification, qui pourrait selon les applications être la société de l'appelant, sa localisation ou toute autre information d'identification pertinente. L'invention est aussi décrite en référence à l'exemple d'un terminal qui est un équipement mobile d'un réseau public mobile; l'invention s'applique aussi à des terminaux d'autres types.

L'invention propose, pour obtenir l'information d'identification de l'appelant, non pas d'accéder à un serveur dédié, mais de commencer par déterminer un serveur pouvant fournir l'information recherchée, avant d'extraire cette information. L'invention permet de la sorte d'obtenir l'information, sans être limité à l'information dont dispose une source dédiée.

La figure unique montre une représentation schématique d'un système de communication dans lequel l'invention est mise en oeuvre; on a porté à la figure le réseau téléphonique classique 1, indiqué par l'acronyme PSTN (de l'anglais "Plain Switched Telephone Network", réseau classique commuté). Le réseau commuté est de façon connue en soi relié à un échangeur 2 d'un réseau privé, marqué PABX sur la figure (acronyme de l'anglais "Private Automatic Branch Exchange"). Le réseau commuté est aussi de façon connue en soi relié à une interface radio 4 - typiquement une station de base - pour des transmissions à travers un réseau mobile public. Est aussi représenté sur la figure un serveur WAP 6 (acronyme de l'anglais "Wireless Application Protocol", protocole d'application sans fil). Ce protocole permet d'offrir des services de données, et notamment des services Internet sur des équipements terminaux de réseaux mobiles publics. Le serveur WAP est relié à l'interface radio 4, au réseau public commuté 1, et par ailleurs au réseau Internet et/ou intranet 8.

La figure montre encore un terminal 10, dans l'exemple un équipement terminal mobile d'un réseau public mobile. Ce terminal, lors d'un appel entrant, reçoit de la part du réseau mobile, le numéro de l'appelant.

Le terminal 10 présente un répertoire 12, qui peut être utilisé pour mettre en oeuvre la première solution mentionnée plus haut, à savoir rechercher s'il existe une entrée du répertoire pour laquelle le numéro de téléphone est identique au numéro de l'appelant.

Selon l'invention, le terminal présente en outre un agent 14 - c'est-à-dire un programme ou une application - qui prépare une ou plusieurs requêtes ayant pour argument le numéro de l'appelant, et pour objectif de déterminer identifiant. L'agent peut être activé par l'utilisateur, comme symbolisé par la flèche 16 sur la figure, ou peut aussi être activé automatiquement. L'agent peut être activé lors de la réception du numéro d'appelant, ou encore si la vérification dans le répertoire montre qu'il n'existe pas d'entrée du répertoire avec le même numéro de téléphone, ou encore après la fin de la communication entrante pour laquelle le numéro d'appelant a été transmis. L'agent peut aussi être activé à chaque fois qu'un numéro d'appelant est affiché sur le terminal de l'utilisateur.

Une requête préparée par l'agent a pour argument le numéro de téléphone de l'appelant reçu lors de l'appel entrant. Cette requête a pour but d'obtenir l'information d'identification à partir de ce numéro de téléphone. La requête peut avoir pour destinataire toute source d'information d'identification correspondante. L'exemple le plus simple est l'envoi d'une requête vers un serveur de données; la requête peut aussi avoir pour destinataire un moteur de recherche, ou encore un portail WAP. Dans un tel cas, le moteur de recherche, le portail WAP ou le serveur peut lui-même procéder à la recherche, et retourner vers le terminal la réponse souhaitée, dans le format souhaité.

La requête préparée par l'agent peut être envoyée sur tout canal disponible sur le terminal; on choisit de préférence le canal le plus efficace et présentant le coût le plus réduit. Dans le cas d'un terminal mobile d'un réseau mobile, la requête pourrait être envoyée par un canal de données en mode paquet non connecté, et par exemple par le GPRS (acronyme de l'anglais "GSM Packet Radio System") dans le cas d'un terminal à la norme GSM. La requête pourrait aussi être envoyée sur un canal de données en mode paquet connecté. Pour des terminaux fixes, on pourrait utiliser un canal de voix en employant un codage DTMF (acronyme de "Dual Tone MultiFrequency"), ou encore un modem à faible vitesse. Pour un terminal mobile utilisant le WAP, on peut transmettre une requête suivant ce protocole. Dans le cas de plusieurs requêtes successives, comme indiqué plus bas, on peut utiliser des canaux différents.

La réponse à la requête peut revenir au terminal par le même canal; on peut aussi prévoir des canaux différents pour la transmission de la requête par le terminal, et pour la réception de la requête sur le terminal.

Les requêtes peuvent être préparées par l'agent à partir d'un fichier de requêtes, référencé 18 sur la figure. Ce fichier peut contenir l'ensemble des requêtes possibles; il est avantageusement mis à jour, par exemple par l'utilisateur; on peut aussi prévoir une mise à jour des requêtes par un serveur distant, ou permettre un télédéchargement des requêtes par l'utilisateur. Les requêtes peuvent être sélectionnées par l'agent en fonction du numéro de l'appelant; par exemple, certaines requêtes peuvent être dédiées à des numéros d'un type particulier, tels que les numéros nationaux en provenance d'un Etat donné, ou encore les numéros provenant d'un opérateur donné.

L'agent peut successivement envoyer plusieurs requêtes pour obtenir les informations d'identification souhaitées. Le choix d'un ordre entre les différentes requêtes peut être prédéterminé, ou être fonction des résultats des tentatives effectuées pour l'identification des numéros précédents. L'ordre des requêtes peut aussi dépendre de la nature du numéro de l'appelant, et par exemple de l'origine géographique ou de toute autre catégorie reconnaissable à partir du numéro de téléphone.

L'agent reçoit les résultats des requêtes. Le traitement du résultat dépend de la nature de celui-ci. Si le résultat correspond à l'identification souhaitée - par exemple la requête retourne le nom de l'utilisateur - l'agent peut afficher l'information obtenue, ou encore la stocker dans le répertoire, avec ou sans validation par l'utilisateur du terminal. Si le résultat ne correspond pas à l'information d'identification souhaitée - par exemple si la requête retourne un message d'erreur ou une indication que l'information n'est pas disponible - l'agent peut ignorer le résultat et déclencher la requête suivante.

L'invention permet de la sorte à l'utilisateur d'obtenir une information d'identification pour un numéro appelant qui lui est transmis. Elle présente l'avantage par rapport aux solutions de l'état de la technique, de permettre une recherche plus complète, et d'offrir une probabilité de réponse plus élevée.

Bien entendu, invention n'est pas limitée aux modes de réalisation décrits. Elle s'applique comme décrit plus haut à des équipements terminaux d'un réseau public mobile. Elle peut aussi s'appliquer à d'autres types de terminaux et par exemple des terminaux fixes ou des terminaux de réseau privé mobile. On peut encore prévoir un télédéchargement d'un agent, pour permettre non seulement la mise à jour du fichier des requêtes, mais aussi la mise à jour éventuelle de l'agent lui-même.

## Revendications

1. Un procédé d'obtention d'information sur l'identité d'un appelant dans un terminal d'un réseau de communication téléphonique, comprenant :
- la réception par le terminal (10) d'un appel entrant et du numéro de l'appelant **caractérisé par** les étapes suivantes :
- la sélection par un agent (14) du terminal, d'au moins un serveur externe susceptible de fournir la dite information sur l'identité de l'appelant;
- la préparation par l'agent d'une requête ayant pour argument le numéro dé téléphone et pour destinataire le serveur;
- l'envoi par l'agent de la requête vers le serveur;
- la réception par l'agent de la réponse du serveur, et
- en l'absence de réponse, ou si la réponse n'est pas satisfaisante, la sélection d'un autre serveur, la préparation d'une autre requête et l'envoi de l'autre requête vers l'autre serveur.

2. Le procédé de la revendication 1, **caractérisé en ce que** les étapes de réception, de sélection d'un autre serveur, de préparation d'une autre requête et d'envoi de l'autre requête vers l'autre serveur sont répétées en l'absence de réponse ou si la réponse n'est pas satisfaisante.

3. Le procédé de la revendication 1 ou 2, **caractérisé en ce que** l'étape de sélection s'effectue par recherche dans un fichier de requêtes (18).

4. Le procédé de l'une des revendications 1 à 3, **caractérisé en ce que** le terminal est un terminal présentant un canal de données, et **en ce que** l'envoi d'une requête s'effectue sur le canal données.

5. Le procédé de l'une des revendications 1 à 4, **caractérisé en ce que** le terminal est un terminal mobile.

6. Un terminal (10) d'un réseau de communication téléphonique dans lequel le numéro d'appelant est transmis lors d'un appel entrant, **caractérisé par** un agent (14) comprenant :
- des moyens de sélection d'au moins un serveur externe susceptible de fournir l'information sur l'identité de l'appelant;
- des moyens de préparation d'une requête ayant pour argument le numéro d'appelant et pour destinataire le serveur;
- des moyens pour envoyer la requête vers lé serveur;
- des moyens pour recevoir ta réponse du serveur, et
- en l'absence de réponse, ou si la réponse n'est pas satisfaisante, des moyens de sélection d'un autre serveur, préparation d'une autre requête et envoi de l'autre requête vers l'autre serveur.

7. Le terminal de la revendication 6, **caractérisé par** un fichier de requêtes (18) auquel l'agent accède pour sélectionner un serveur et préparer une requête.

8. Le terminal de l'une des revendications 6 à 7, **caractérisé en ce que** le terminal est un terminal présentant un canal de données, et **en ce que** l'envoi d'une requête s'effectue sur le canal données.

9. Le terminai de l'une des revendications 6 à 8, **caractérisé en ce que** le terminal est un terminal mobile.

10. Le terminal de l'une des revendications 6 à 8, **caractérisé en ce que** le terminal est un terminal fixe raccordé au réseau téléphonique.

11. Le terminal de l'une des revendications 6 à 8, **caractérisé en ce que** te terminal est un terminal fixe ayant un accès internet.

## Claims

1. A method for obtaining information on the identity of a caller within a terminal of a telephone communication network, comprising:
- the terminal (10) receiving an incoming call and the caller's number, **characterized by** the following steps:
- an agent (14) of the terminal selecting at least one outside server capable of providing said information regarding the caller's identity;
- the agent preparing a request with the telephone number as an argument and the server as its recipient;
- the agent sending the request to the server;
- the agent receiving the server's response, and
- if there is no response, or if the response is not satisfactory, selecting another server, preparing another request and sending the other request to the other server.

2. The method of claim 1, **characterized in that** the steps of receiving, selecting another server, preparing another request, and sending the other request to the other server are repeated if there is no response or if the response is not satisfactory.

3. The method of claim 1 or 2, **characterized in that** the selection step is performed by searching within a request file (18).

4. The method of either one of claims 1 to 3, **characterized in that** the terminal is a terminal with a data channel, and **in that** the request is sent over the data channel.

5. The method of either one of claims 1 to 4, **characterized in that** the terminal is a mobile terminal.

6. A terminal (10) of a telephone communication network, wherein the caller's number is transmitted at the time of an incoming call, **characterized by** an agent (14) comprising:
- means for selecting at least one outside server capable of providing information regarding the caller's identity;
- means for preparing a request with the telephone number as an argument and the server as its recipient_{;}
- means for sending the request to the server;
- means for receiving the server's response, and
- if there is no response, or if the response is not satisfactory, means for selecting another server, preparing another request, and sending the other request to the other server.

7. The terminal of claim 6, **characterized by** a request file (18) which the agent accesses to select a server and prepare a request.

8. The terminal of either one of claims 6 to 7, **characterized in that** the terminal is a terminal with a data channel, and **in that** the request is sent over the data channel.

9. The terminal of either one of claims 6 to 8, **characterized in that** the terminal is a mobile terminal.

10. The terminal of either one of claims 6 to 8, **characterized in that** the terminal is a fixed terminal connected to the telephone network.

11. The terminal of either one of claims 6 to 8, **characterized in that** the terminal is a fixed terminal with Internet access.

## Patentansprüche

1. Ein Verfahren zum Gewinnen von Informationen über die Identität eines Anrufenden in einem Endgerät eines Telefonkommunikationsnetzwerks, umfassend:
- Das Empfangen, durch das Endgerät (10), eines eingehenden Rufs und der Nummer des Anrufenden, **gekennzeichnet durch** die folgenden Schritte:
- Auswählen, **durch** einen Agenten (14) des Endgeräts, von mindestens einem externern Server, welcher geeignet ist, die besagten Informationen über die Identität des Anrufenden bereitzustellen;
- Vorbereiten, **durch** den Agenten, einer Anfrage, deren Argument die Telefonnummer und der Empfänger der Server ist;
- Senden, **durch** den Agenten, der Anfrage an den Server;
- Empfangen, **durch** den Agenten, der Antwort des Servers, und
- wenn keine Antwort kommt oder die Antwort nicht zufriedenstellend ist, Auswahl eines anderen Servers, Vorbereitung einer anderen Anfrage und Senden der anderen Anfrage an den anderen Server.

2. Das Verfahren nach Anspruch 1, **dadurch gekennzeichnet, dass** die Schritte des Empfangens, des Auswählen eines anderen Servers, des Vorbereitens einer anderen Anfrage und des Sendens der anderen Anfrage an den anderen Server wiederholt werden, wenn keine Antwort kommt oder die Antwort nicht zufriedenstellend ist.

3. Das Verfahren nach Anspruch 1 oder 2, **dadurch gekennzeichnet, dass** der Schritt des Auswählens durch Suche in einer Anfragedatei (18) erfolgt.

4. Das Verfahren nach einem der Ansprüche 1 bis 3, **dadurch gekennzeichnet, dass** das Endgerät ein Endgerät ist, welches einen Datenkanal aufweist, und dass das Senden einer Anfrage auf dem Datenkanal erfolgt.

5. Das Verfahren nach einem der Ansprüche 1 bis 4, **dadurch gekennzeichnet, dass** das Endgerät ein mobiles Endgerät ist.

6. Ein Endgerät (10) eines Telefonkommunikationsnetzwerks, in welchem die Nummer des Anrufenden bei einem eingehenden Ruf übertragen wird, **gekennzeichnet durch** einen Agenten (14), welcher umfasst:
- Mittel zum Auswählen von mindestens einem externern Server, welcher geeignet ist, die Informationen über die Identität des Anrufenden bereitzustellen;
- Mittel zum Vorbereiten einer Anfrage, deren Argument die Telefonnummer des Anrufenden und der Empfänger der Server ist;
- Mittel zum Empfangen der Antwort des Servers, und
- wenn keine Antwort kommt oder die Antwort nicht zufriedenstellend ist, Mittel zum Auswählen eines anderen Servers, Vorbereiten einer anderen Anfrage und Senden der anderen Anfrage an den anderen Server.

7. Das Endgerät nach Anspruch 6, **gekennzeichnet durch** eine Anfragedatei (18), auf welche der Agent zugreift, um einen Server auszuwählen und eine Anfrage vorzubereiten.

8. Das Endgerät nach einem der Ansprüche 6 bis 7, **dadurch gekennzeichnet, dass** das Endgerät ein Endgerät ist, welches einen Datenkanal aufweist, und dass das Senden einer Anfrage auf dem Datenkanal erfolgt.

9. Das Endgerät nach einem der Ansprüche 6 bis 8, **dadurch gekennzeichnet, dass** das Endgerät ein mobiles Endgerät ist.

10. Das Endgerät nach einem der Ansprüche 6 bis 8, **dadurch gekennzeichnet, dass** das Endgerät ein ortsfestes Endgerät ist, welches an das Telefonnetzwerk angeschlossen ist.

11. Das Endgerät nach einem der Ansprüche 6 bis 8, **dadurch gekennzeichnet, dass** das Endgerät ein ortsfestes Endgerät mit einem Internet-Anschluss ist.
